# EUROPEAN PATENT APPLICATION

(11) **EP 4 697 108 A2**
(43) Date of publication of application: **18.02.2026**
(21) Application number: 25194299.1
(22) Date of filing: 06.08.2025
(51) Int. Cl.: G05B 19/042, H04L 12/66, H04L 12/40

(54) **FIELD COMMUNICATION SYSTEM, RELAY COMMUNICATION DEVICE, AND FIELD COMMUNICATION METHOD**

(30) Priority: 16.08.2024 JP 2024135876
(71) Applicant: Yokogawa Electric Corporation, Tokyo 180-8750 (JP)
(72) Inventor: HABAGUCHI, Kenji, Musashino-shi, Tokyo 180-8750 (JP)
(74) Representative: Winter, Brandl - Partnerschaft mbB

(57) **Abstract**

In a field communication system 1, each of a field device (40-1), a second filed device (40-2),..., and a N-th field device (40-N) has a sensor, transmits senso data, performs self-diagnosis on the field device (40-1, 40-2,..., 40-N) to transmit self-diagnosis data, a relay communication device (10) receives the sensor data and the self-diagnosis data and transmits the sensor data and the self-diagnosis data using communication paths that are different from each other, a first communication device (20) receives the sensor data using a first communication path (P1), and a second communication device (30) receives the self-diagnosis data using a second communication path (P2).

## Description

### FIELD

The present disclosure relates to a field communication system, a relay communication device, and a field communication method.

### BACKGROUND

In maintenance of a field device, such as a pressure transmitter or a flow transmitter, a maintenance method in which, after a failure occurs in a field device, the failure is dealt with (sometimes referred to as "breakdown maintenance/reactive maintenance" below) is employed in general.

On the other hand, employing a maintenance method in which a symptom of a failure in a field device is sensed and addressing the symptom before occurrence of a failure (sometimes referred to as "predictive maintenance" below) makes it possible to increase an operating ratio of the field device compared to breakdown maintenance.

An example of related-art is described in Japanese Laid-open Patent Publication No. 2017-158056.

In realizing predictive maintenance on a field device, it is considered that the field device performs self-diagnosis on the field device and transmits data indicating a result of execution of self-diagnosis (sometimes referred to as "self-diagnosis data" below) to a communication device and the communication device senses a symptom of a failure in the field device based on the self-diagnosis data.

The data that is transmitted from the field device to the communication device however includes data indicating a physical quantity that is detected by a sensor that the field device has (sometimes referred to as "sensor data" below) in addition to the self-diagnosis data. For this reason, to realize predictive maintenance on the field device, it is preferable that the self-diagnosis data be transmitted without hindering of the sensor data in a communication path from the field device to the communication device.

### SUMMARY

According to an aspect of an embodiment, a field communication system in the present disclosure includes a field device, a relay communication device, a first communication device, and a second communication device. The field device includes a sensor, transmits sensor data that is data indicating a physical quantity that is detected by the sensor, performs self-diagnosis on the field device, and transmits self-diagnosis data that is data indicating a result of execution of the self-diagnosis. The relay communication device receives the sensor data and the self-diagnosis data that are transmitted from the field device and transmits the sensor data and the self-diagnosis data using communication paths that are different from each other. The first communication device receives the sensor data using a first communication path. The second communication device receives the self-diagnosis data using a second communication path.

### BRIEF DESCRIPTION OF THE DRAWINGS

FIG. 1 is a diagram illustrating an example of a configuration of a field communication system of the disclosure;
FIG. 2 is a diagram illustrating an example of a configuration of a relay communication device of the disclosure;
FIG. 3 is a diagram illustrating an example of a configuration of a first communication device of the disclosure;
FIG. 4 is a diagram illustrating an example of a configuration of a second communication device of the disclosure; and
FIG. 5 is a diagram illustrating an example of operations of the field communication system of the disclosure.

### DESCRIPTION OF EMBODIMENTS

An embodiment of the disclosure will be described according to the accompanying drawings below.

Note that, in the following embodiment, the same reference numerals are assigned to the same parts or the same sets of processing and thus redundant descriptions will be sometimes thus omitted.

### Configuration of Field Communication System

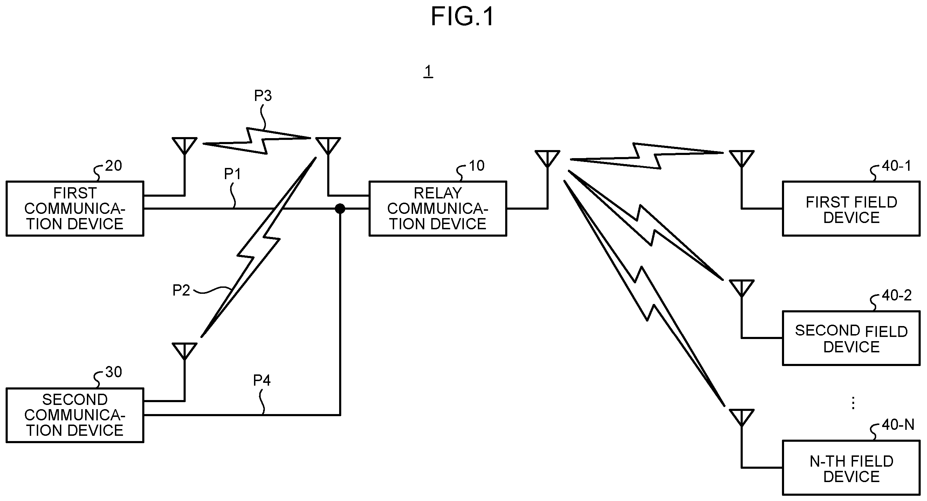

FIG. 1 is a diagram illustrating an example of a configuration of a field communication system of the disclosure. In FIG. 1, a field communication system 1 includes a relay communication device 10, a first communication device 20, a second communication device 30, and a first field device 40-1, a second field device 40-2,..., and a N-th field device 40-N that are a plurality of field devices. The first field device 40-1, the second field device 40-2,..., and the N-th field device 40-N are sometimes collectively referred to as a "field device 40".

The first communication device 20 and the field device 40 perform field communication via the relay communication device 10 and the second communication device 30 and the field device 40 perform field communication via the relay communication device 10. A pressure transmitter, a temperature transmitter, a flow transmitter, a valve switch, etc., are taken as an example of the field device 40.

Each of the first field device 40-1, the second field device 40-2,..., and the N-th field device 40-N and the relay communication device 10 are able to communicate with each other via a wireless communication path. ISA100.11, or the like, is taken as an example of a communication method of wireless communication that is used between the field device 40 and the relay communication device 10.

The relay communication device 10 and the first communication device 20 are able to communicate with each other via a first communication path P1 and a third communication path P3. The first communication path P1 is a wired communication path and the third communication path P3 is a wireless communication path.

The relay communication device 10 and the second communication device 30 are able to communicate with each other via a second communication path P2 and a fourth communication path P4. The second communication path P2 is a wireless communication path and the fourth communication path P4 is a wired communication path.

PROFINET, and the like, are taken as examples of a communication method of wired communication that is performed in the first communication path P1 and the fourth communication path P4. The bandwidth of the second communication path P2 and the third communication path P3 and the bandwidth of wireless communication that is used between the field device 40 and the relay communication device 10 are different from each other and Z-Wave, and the like, are taken as examples of a communication method of wireless communication that is performed in the second communication path P2 and the third communication path P3.

The field device 40 includes a sensor and transmits sensor data and self-diagnosis data to the relay communication device 10.

The relay communication device 10 receives the sensor and transmits sensor data and the self-diagnosis data from the field device 40 and transmits the received sensor data to the first communication device 20, while the relay communication device 10 transmits the received self-diagnosis data to the second communication device 30.

The first communication device 20 receives the sensor data from the relay communication device 10. The first communication device 20 generates data for controlling the field device 40 (sometimes referred to as "control data" below) based on the received sensor data and transmits the generated control data to the relay communication device 10. The relay communication device 10 transmits the received control data to the field device 40. For example, in the case where the field device 40 is a flow transmitter and a valve switch, control data indicating opening of the valve is generated based on the sensor data indicating the flow of a liquid.

The second communication device 30 transmits a request to acquire self-diagnosis data (data acquisition request) to the relay communication device 10 and the relay communication device 10 transmits self-diagnosis data to the second communication device 30 in response to the data acquisition request. The second communication device 30 receives self-diagnosis data from the relay communication device 10 and senses a symptom of a failure in the field device 40 using the received self-diagnosis data. For example, the second communication device 30 analyzes the self-diagnosis data and determines whether the field device 40 operates stably based on the result of the analysis, thereby sensing a symptom of a failure in the field device 40.

### Configuration of Relay Communication Device

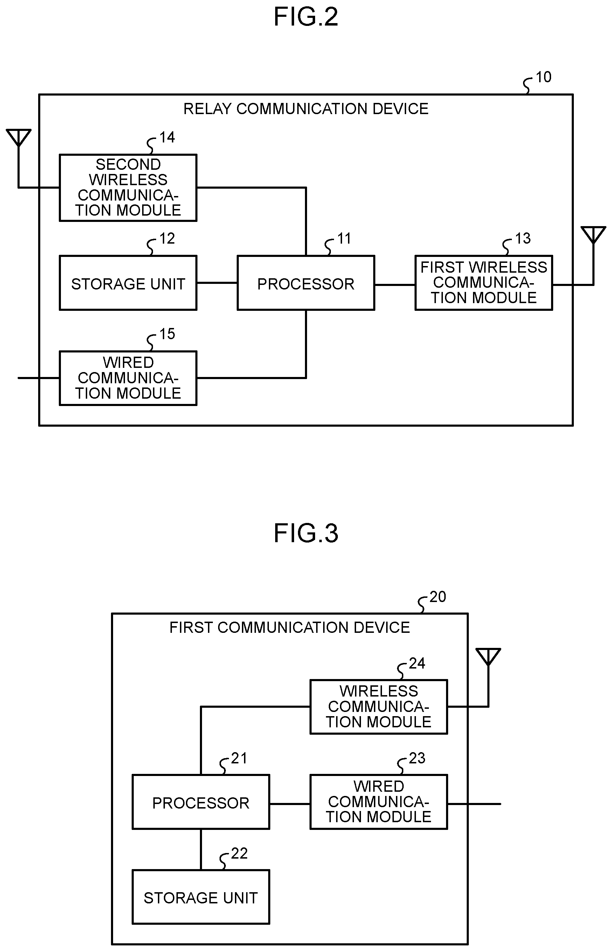

FIG. 2 is a diagram illustrating an example of a configuration of a relay communication device of the disclosure. The relay communication device 10 in FIG. 2 includes a processor 11, a storage unit 12, a first wireless communication module 13, a second wireless communication module 14, and a wired communication module 15. A central processing unit (CPU), and the like, are taken as examples of the processor 11. A memory, and the like, are take as examples of the storage unit 12.

The first wireless communication module 13 is able to communicate with each of the first field device 40-1, the second field device 40-2,..., and the N-th field device 40-N using a wireless communication path and outputs the data that is received from the field device 40 to the processor 11.

The processor 11 determines which of the sensor data and self-diagnosis data the data received from the field device 40 is and, based on the result of the determination, outputs the sensor data to the second wireless communication module 14 or the wired communication module 15 and outputs self-diagnosis data to the second wireless communication module 14 or the wired communication module 15. The processor 11 writes the self-diagnosis data received from the field device 40 in the storage unit 12 and reads the self-diagnosis data from the storage unit 12 in response to a data acquisition request from the second communication device 30 and outputs the self-diagnosis data to the second wireless communication module 14 or the wired communication module 15.

While the second wireless communication module 14 is able to communicate with the first communication device 20 using the third communication path P3, the second wireless communication module 14 is able to communicate with the second communication device 30 using the second communication path P2. While a second wireless communication module 14 transmits the sensor data to the first communication device 20 using the third communication path P3, the second wireless communication module 14 transmits the self-diagnosis data to the second communication device 30 using the second communication path P2.

The second wireless communication module 14 receives the control data that is transmitted from the first communication device 20 using the third communication path P3 and outputs the received control data to the processor 11. The processor 11 outputs the control data that is input from the second wireless communication module 14 to the first wireless communication module 13 and the first wireless communication module 13 transmits the control data that is input from the processor 11 to the field device 40.

While the wired communication module 15 is able to communicate with the first communication device 20 using the first communication path P1, the wired communication module 15 is able to communicate with the second communication device 30 using the fourth communication path P4. The wired communication module 15 transmits the sensor data to the first communication device 20 using the first communication path P1.

The wired communication module 15 receives the control data that is transmitted from the first communication device 20 using the first communication path P1 and outputs the received control data to the processor 11. The processor 11 outputs the control data that is input from the wired communication module 15 to the first wireless communication module 13 and the first wireless communication module 13 transmits the control data that is input from the processor 11 to the field device 40.

When the control data is received from the first communication device 20 via the wired communication module 15 using the first communication path P1, the processor 11 transmits the sensor data to the first communication device 20 via the wired communication module 15 using the first communication path P1. On the other hand, when the control data is received from the first communication device 20 via the second wireless communication module 14 using the third communication path P3, the processor 11 transmits the sensor data to the first communication device 20 via the second wireless communication module 14 using the third communication path P3.

The processor 11 receives the data acquisition request from the second communication device 30 via the second wireless communication module 14 using the second communication path P2 and thus transmits the self-diagnosis data to the second communication device 30 via the second wireless communication module 14 using the second communication path P2.

### Configuration of First Communication Device

FIG. 3 is a diagram illustrating an example of a configuration of a first communication device of the disclosure. The first communication device 20 in FIG. 3 includes a processor 21, a storage unit 22, a wired communication module 23, and a wireless communication module 24. A CPU, and the like, are taken as examples of the processor 21. A memory, and the like, are taken as examples of the storage unit 22.

The wired communication module 23 is able to communicate with the relay communication device 10 using the first communication path P1. The wired communication module 23 receives the sensor data from the relay communication device 10 using the first communication path P1 and outputs the received sensor data to the processor 21.

The wireless communication module 24 is able to communicate with the relay communication device 10 using the third communication path P3. The wireless communication module 24 receives the sensor data from the relay communication device 10 using the third communication path P3 and outputs the received sensor data to the processor 21.

The processor 21 generates control data based on the sensor data that is input from the wired communication module 23 or the wireless communication module 24 and outputs the generated control data to the wired communication module 23 or the wireless communication module 24. Note that the processor 21 may cause the storage unit 22 to store the sensor data. The wired communication module 23 transmits control data that is input from the processor 21 to the relay communication device 10 using the first communication path P1. On the other hand, the wireless communication module 24 transmits the control data that is input from the processor 21 to the relay communication device 10 using the third communication path P3.

### Configuration of Second Communication Device

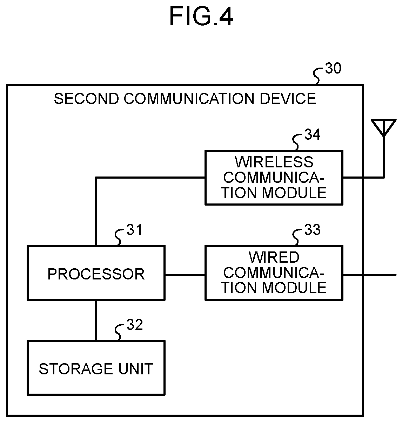

FIG. 4 is a diagram illustrating an example of a configuration of a second communication device of the disclosure. The second communication device 30 in FIG. 4 includes a processor 31, a storage unit 32, a wired communication module 33, and a wireless communication module 34. A CPU, and the like, are taken as examples of the processor 31. A memory, and the like, are taken as examples of the storage unit 32.

The wireless communication module 34 is able to communicate with the relay communication device 10 using the second communication path P2. The wireless communication module 34 transmits the data acquisition request that is input from the processor 31 to the relay communication device 10 using the second communication path P2. The wireless communication module 34 receives the self-diagnosis data from the relay communication device 10 using the second communication path P2 and outputs the received self-diagnosis data to the processor 31.

The wired communication module 33 is able to communicate with the relay communication device 10 using the fourth communication path P4.

The processor 31 senses a symptom of a failure in the field device 40 using the self-diagnosis data that is input from the wireless communication module 34 or the wired communication module 33. The processor 31 may monitor the sensor data that is transmitted from the relay communication device 10 to the first communication device 20 via the wired communication module 33 using the fourth communication path P4. Monitoring the sensor data by the processor 31 makes it possible to add a trend of the sensor data to the self-diagnosis data and sense a symptom of a failure in the field device 40, thereby making it possible to increase accuracy in sensing a symptom of a failure. Note that the processor 31 may cause the storage unit 32 to store the self-diagnosis data and the sensor data.

### Operations of Field Communication System

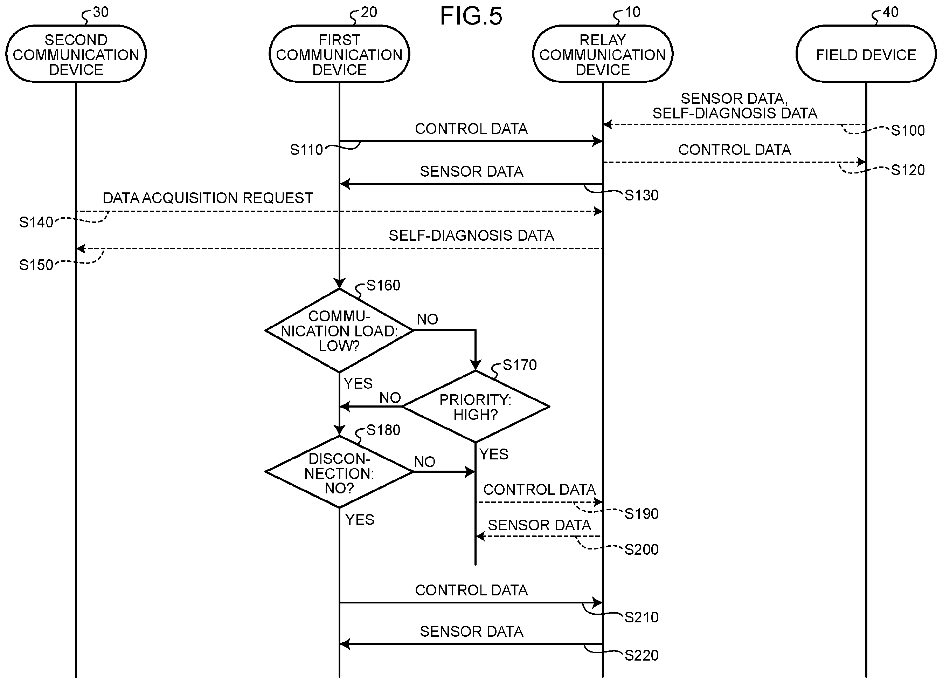

An example of operations of the field communication system 1 will be described below. FIG. 5 is a diagram illustrating an example of operations of a field communication system of the disclosure. FIG. 5 illustrates the wired communication paths by "solid lines" and illustrates the wireless communication paths by "dotted lines" between the field device 40, the relay communication device 10, the first communication device 20, and the second communication device 30.

At step S100 in FIG. 5, the field device 40 transmits sensor data and self-diagnosis data to the relay communication device 10.

At step S110, the first communication device 20 transmits the control data to the relay communication device 10 using the first communication path P1 and, at step S120, the relay communication device 10 transmits the control data to the field device 40.

At step S130, the relay communication device 10 having received the control data using the first communication path P1 at step S110 transmits the sensor data to the first communication device 20 using the first communication path P1.

At step S140, the second communication device 30 transmits a data acquisition request to the relay communication device 10 using the second communication path P2 and, at step S150, the relay communication device 10 transmits the self-diagnosis data to the second communication device 30 using the second communication path P2.

At step S160, the processor 21 of the first communication device 20 determines whether a communication load in the first communication path P1 is high or low. While the processor 21 determines that the communication load is high when the communication load in the first communication path P1 is at or above a threshold TH1, the processor 21 determines that the communication load is low when the communication load in the first communication path P1 is under the threshold TH1. For example, the processor 21 has a counter that is cleared at regular intervals using a constant timer and increments the counter each time sensor data is received in the first communication path P1 and, while the processor 21 determines that the communication load in the first communication path P1 is at or above the threshold TH1 and is high when the counter value is at or above a threshold TH2, the processor 21 determines that communication load in the first communication path P1 is under the threshold TH1 and is low when the counter value is under the threshold TH2. When the communication load is low (Yes at step S160), the process proceeds to step S180 and, when the communication load is high (No at step S160), the process proceeds to step S170.

At step S170, the processor 21 determines whether the priority of the sensor data that is received from the relay communication device 10 is high or low. For example, the processor 21 determines that the priority of the sensor data that is transmitted from the field device 40 of which control loop is important, such as a valve switch, is at or above a threshold TH3 and is high. For example, the processor 21 determines that the priority of the sensor data that is transmitted from the field device 40 of which sensor data varies from moment to moment, such as a flow transmitter, is at or above the threshold TH3 and is high. For example, the processor 21 determines that the priority of the sensor data that is transmitted from the field device 40 of which sensor data does not vary significantly in a short time, such as a temperature transmitter, is under the threshold TH3 and is low. When the priority of the sensor data is high (Yes at step S170), the process proceeds to steps S190 and S200 and, when the priority of the sensor data is low (No at step S170), the process proceeds to step S180.

At step S180, the processor 21 determines whether there is disconnection in the first communication path P1. For example, the processor 21 determines that there is disconnection in the first communication path P1 when the sensor data cannot be received for a given time in the first communication path P1. When it is determined that there is disconnection in the first communication path P1 (No at step S180), the process proceeds to steps S190 and S200 and, when it is determined that there is no disconnection in the first communication path P1 (Yes at step S180), the process proceeds to steps S210 and S220.

At step S190, the first communication device 20 transmits control data to the relay communication device 10 using the third communication path P3. At step S200, the relay communication device 10 having received the control data using the third communication path P3 at step S190 transmits the sensor data to the first communication device 20 using the third communication path P3.

On the other hand, at step S210, the first communication device 20 transmits control data to the relay communication device 10 using the first communication path P1. At step S220, the relay communication device 10 having received the control data using the first communication path P1 at step S210 transmits the sensor data to the first communication device 20 using the first communication path P1.

It is possible to omit any one or two of the three determination processes at steps S160, S170, and S180 in FIG. 5.

As described above, for example, when the communication load in the first communication path P1 is under the threshold TH1 and is low (Yes at step S160) and there is no disconnection in the first communication path P1 (Yes at step S180), the processor 11 of the relay communication device 10 transmits the sensor data to the first communication device 20 using the first communication path P1 (step S220).

For example, when there is disconnection in the first communication path P1 (No at step S180), the processor 11 transmits the sensor data to the first communication device 20 using the third communication path P3 (step S200).

For example, when the communication load in the first communication path P1 is at or above the threshold TH1 and high (No at step S160), the processor 11 transmits the sensor data to the first communication device 20 using the third communication path P3 (step S200).

For example, when the communication load in the first communication path P1 is at or above the threshold TH1 and is high (No at step S160) and the priority of the sensor data is at or above the threshold TH3 and is high (Yes at step S170), the processor 11 transmits the sensor data to the first communication device 20 using the third communication path P3 (step S200).

For example, when the priority of the sensor data is under the threshold TH3 and is low (No at step S170), the processor 11 transmits the sensor data to the first communication device 20 using the first communication path P1 (step S220).

Note that the processor 11 may stop transmission of the self-diagnosis data using the second communication path P2 in order to lower the communication load in wireless communication during transmission of the sensor data to the first communication device 20 using the third communication path P3.

When communication other than communication of the sensor data is performed in the third communication path P3, the processor 21 of the first communication device 20 may receive the sensor data from the relay communication device 10 using the third communication path P3 after waiting for a given time.

When communication other than communication of the self-diagnosis data is performed in the second communication path P2, the processor 31 of the second communication device 30 may receive the self-diagnosis data from the relay communication device 10 using the second communication path P2 after waiting for a given time.

The embodiment has been described.

As described above, the field communication system of the disclosure (the field communication system 1 of the embodiment) includes the field device (the field device 40 of the embodiment), the relay communication device (the relay communication device 10 of the embodiment), the first communication device (the first communication device 20 of the embodiment), and the second communication device (the second communication device 30 of the embodiment). The field device includes a sensor and, while the field device transmits sensor data, the field device performs self-diagnosis on the field device and transmits self-diagnosis data. The relay communication device receives the sensor data and the self-diagnosis data that are transmitted from the field device and transmits the sensor data and the self-diagnosis data using communication paths that are different from each other. The first communication device receives the sensor data using the first communication path (the first communication path P1 in the embodiment). The second communication device receives the self-diagnosis data using the second communication path (the second communication path P2 in the embodiment).

Doing as describe above makes it possible to transmit the self-diagnosis data without hindering transmission of the sensor data, which makes it easy to realize predictive maintenance on the field device.

According to the disclosure, it is possible to transmit self-diagnosis data without hindering transmission of sensor data.

Some examples of a combinations of techniques of the present disclosure will be described below.
(1) A field communication system comprising:
   a field device that includes a sensor, that transmits sensor data that is data indicating a physical quantity that is detected by the sensor, that performs self-diagnosis on the field device, and that transmits self-diagnosis data that is data indicating a result of execution of the self-diagnosis;
   a relay communication device that receives the sensor data and the self-diagnosis data that are transmitted from the field device and that transmits the sensor data and the self-diagnosis data using communication paths that are different from each other;
   a first communication device that receives the sensor data using a first communication path; and
   a second communication device that receives the self-diagnosis data using a second communication path.
(2) The field communication system according to (1), wherein the first communication path is a wired communication path, and
   the second communication path is a wireless communication path.
(3) The field communication system according to (2), wherein, when there is no disconnection in the first communication path and a communication load in the first communication path is under a threshold and is low, the first communication device receives the sensor data from the relay communication device using the first communication path.
(4) The field communication system according to (2), wherein, when there is disconnection in the first communication path, the first communication device receives the sensor data from the relay communication device using a third communication path that is a wireless communication path.
(5) The field communication system according to (2), wherein, when a communication load in the first communication path is at or above a threshold and is high, the first communication device receives the sensor data from the relay communication device using a third communication path that is a wireless communication path.
(6) The field communication system according to (2), wherein, when a communication load in the first communication path is at or above a threshold and is high and priority of the sensor data is at or above a threshold and is high, the first communication device receives the sensor data from the relay communication device using a third communication path that is a wireless communication path.
(7) The field communication system according to (2), wherein, when priority of the sensor data is under a threshold and is low, the first communication device receives the sensor data from the relay communication device using the first communication path.
(8) The field communication system according to any one of (4), (5) and (6), wherein, when communication other than communication of the sensor data is performed in the third communication path, the first communication device receives the sensor data from the relay communication device using the third communication path after waiting for a given time.
(9) The field communication system according to (2), wherein, when communication other than communication of the self-diagnosis data is performed in the second communication path, the second communication device receives the self-diagnosis data from the relay communication device using the second communication path after waiting for a given time.
(10) The field communication system according to any one of (4), (5) and (6), wherein the relay communication device stops transmission of the self-diagnosis data using the second communication path during transmission of the sensor data to the first communication device using the third communication path.
(11) The field communication system according to (1), wherein the relay communication device determines whether the data received from the field device is the sensor data or the self-diagnosis data, and transmits the self-diagnosis data to the second communication device using the second communication path.
(12) The field communication system according to (2), wherein a communication method of the first communication path is PROFINET, and a communication method of the second communication path is Z-Wave.
(13) A relay communication device comprising:
   a receiver that receives data that is transmitted from a field device including a sensor;
   a processor that determines whether the data is sensor data that is data indicating a physical quantity detected by the sensor, or self-diagnosis data that is data indicating a result of execution of self-diagnosis on the field device;
   a first transmitter that transmits the sensor data to a first communication device using a first communication path; and
   a second transmitter that transmits the self-diagnosis data to a second communication device using a second communication path.
(14) A field communication method comprising:
   by a field device including a sensor, transmitting sensor data that is data indicating a physical quantity that is detected by the sensor, performing self-diagnosis on the field device, and transmitting self-diagnosis data that is data indicating a result of execution of the self-diagnosis;
   by a relay communication device, receiving the sensor data and the self-diagnosis data that are transmitted from the field device and transmitting the sensor data and the self-diagnosis data using communication paths that are different from each other;
   by a first communication device, receiving the sensor data using a first communication path; and
   by a second communication device, receiving the self-diagnosis data using a second communication path.

## Claims

1. A field communication system (1) comprising:
a field device (40-1, 40-2,..., 40-N) that includes a sensor, that transmits sensor data that is data indicating a physical quantity that is detected by the sensor, that performs self-diagnosis on the field device, and that transmits self-diagnosis data that is data indicating a result of execution of the self-diagnosis;
a relay communication device (10) that receives the sensor data and the self-diagnosis data that are transmitted from the field device and that transmits the sensor data and the self-diagnosis data using communication paths that are different from each other;
a first communication device (20) that receives the sensor data using a first communication path (P1); and
a second communication device (30) that receives the self-diagnosis data using a second communication path (P2).

2. The field communication system (1) according to claim 1, wherein the first communication path (P1) is a wired communication path, and
the second communication path (P2) is a wireless communication path.

3. The field communication system (1) according to claim 2, wherein, when there is no disconnection in the first communication path (P1) and a communication load in the first communication path (P1) is under a threshold and is low, the first communication device (20) receives the sensor data from the relay communication device (10) using the first communication path (P1).

4. The field communication system (1) according to claim 2, wherein, when there is disconnection in the first communication path (P1), the first communication device (20) receives the sensor data from the relay communication device (10) using a third communication path (P3) that is a wireless communication path.

5. The field communication system (1) according to claim 2, wherein, when a communication load in the first communication path (P1) is at or above a threshold and is high, the first communication device (20) receives the sensor data from the relay communication device (10) using a third communication path (P3) that is a wireless communication path.

6. The field communication system (1) according to claim 2, wherein, when a communication load in the first communication path (P1) is at or above a threshold and is high and priority of the sensor data is at or above a threshold and is high, the first communication device (20) receives the sensor data from the relay communication device (10) using a third communication path (P3) that is a wireless communication path.

7. The field communication system (1) according to claim 2, wherein, when priority of the sensor data is under a threshold and is low, the first communication device (20) receives the sensor data from the relay communication device (10) using the first communication path (P1).

8. The field communication system (1) according to any one of claims 4, 5 and 6, wherein, when communication other than communication of the sensor data is performed in the third communication path (P3), the first communication device (20) receives the sensor data from the relay communication device (10) using the third communication path (P3) after waiting for a given time.

9. The field communication system (1) according to claim 2, wherein, when communication other than communication of the self-diagnosis data is performed in the second communication path (P2), the second communication device (30) receives the self-diagnosis data from the relay communication device (10) using the second communication path (P2) after waiting for a given time.

10. The field communication system (1) according to any one of claims 4, 5 and 6, wherein the relay communication device (10) stops transmission of the self-diagnosis data using the second communication path (P2) during transmission of the sensor data to the first communication device (20) using the third communication path (P3).

11. The field communication system (1) according to claim 1, wherein the relay communication device (10) determines whether the data received from the field device (40-1, 40-2,..., 40-N) is the sensor data or the self-diagnosis data, transmits the sensor data to the first communication device (20) using the first communication path (P1), and transmits the self-diagnosis data to the second communication device (30) using the second communication path (P2).

12. A relay communication device (10) comprising:
a receiver (13) that receives data that is transmitted from a field device (40-1, 40-2,..., 40-N) including a sensor;
a processor (11) that determines whether the data is sensor data that is data indicating a physical quantity detected by the sensor, or self-diagnosis data that is data indicating a result of execution of self-diagnosis on the field device (40-1, 40-2,..., 40-N);
a first transmitter (15) that transmits the sensor data to a first communication device (20) using a first communication path (P1); and
a second transmitter (14) that transmits the self-diagnosis data to a second communication device (30) using a second communication path (P2).

13. A field communication method comprising:
by a field device including a sensor, transmitting sensor data that is data indicating a physical quantity that is detected by the sensor, performing self-diagnosis on the field device, and transmitting self-diagnosis data that is data indicating a result of execution of the self-diagnosis;
by a relay communication device, receiving the sensor data and the self-diagnosis data that are transmitted from the field device and transmitting the sensor data and the self-diagnosis data using communication paths that are different from each other;
by a first communication device, receiving the sensor data using a first communication path; and
by a second communication device, receiving the self-diagnosis data using a second communication path.
